# EUROPÄISCHE PATENTANMELDUNG

(11) **EP 1 286 160 A1**
(43) Veröffentlichungstag der Anmeldung: **26.02.2003**
(21) Anmeldenummer: 02450154.6
(22) Anmeldetag: 09.07.2002
(51) Int. Cl.: G01N 33/00, G01N 21/61

(54) **Abgas-Testgerät für Brennkraftmaschinen**

(30) Priorität: 09.08.2001 AT 6292001 U
(71) Anmelder: Andetsberger, Hermann, 4910 Ried im Innkreis (AT)
(72) Erfinder: Andetsberger, Hermann, 4910 Ried im Innkreis (AT)
(74) Vertreter: Hübscher, Helmut, Dipl.-Ing.

(57) **Zusammenfassung**

Bei einem Abgas-Testgerät für Brennkraftmaschinen, insbesondere von Kraftfahrzeugen, zur Bestimmung des Kohlenoxid- (CO- und CO₂-) und Stickoxid-(NO- NO₂-(NO)ₓ-)gehaltes mit einem für die Abgasuntersuchung bei Benzin-Vergasermotoren geeigneten, nach dem Prinzip der IR-Untersuchung arbeitenden Testgerät (1), dem ein Filter (7) zur Abscheidung von Festpartikeln und ein Abscheider (6) für Wasser vorgeordnet ist, wird dem Testgerät (1) zur Ermöglichung der Untersuchung der Abgase von Einspritzmotoren, insbesondere Dieselmotoren, ein Vorschaltgerät (2) mit einer Filteranordnung (7, 8) zur Abscheidung sowohl von Ruß als auch von Ölpartikeln sowie von unverbrannten Paraffinölen zugeordnet.

## Beschreibung

Die Erfindung bezieht sich auf ein Abgas-Testgerät für Brennkraftmaschinen, insbesondere von Kraftfahrzeugen, zur Bestimmung des Kohlenoxid- (COund CO₂-) und Stickoxid- (NO- NO₂-(NO)ₓ-) gehaltes mit einem für die Abgasuntersuchung in Benzin-Vergasermotoren geeigneten, nach dem Prinzip der IR-Untersuchung arbeitenden Testgerät mit einem Filter zur Abscheidung von Festpartikeln und einem Abscheider für Wasser.

Abgas-Testgeräte dieser Art, die nach dem Prinzip der Infrarot-Spektralanalyse arbeiten, sind z. B. aus der GB 2 271 181 A bekannt. Bei dieser Anordnung ist innerhalb des Gaseinlasses einem Beschickungsventilator vorgeordnet ein Filter für Feststoffe und eine Trocknerstufe vorgesehen. Dieses Testgerät ist bisher aber grundsätzlich nur für die Untersuchung der Abgase von Benzinmotoren und hier sogar mit einer gewissen Einschränkung bei Einspritzmotoren geeignet. Ein weiteres Testgerät, das aber ohne Wasserabscheider und Feststoffilter arbeitet, ist aus der GB 2 235 044 A bekannt.

Die Abgase von Einspritzmotoren und insbesondere Dieselmotoren enthalten zusätzlich fettige und ölige Rußpartikel sowie Dämpfe von unverbranntem Paraffin oder entsprechenden Paraffinölen und haben einen erhöhten Wasserdampfgehalt . Der Einsatz der oben genannten Testgeräte ist bisher wegen der entsprechenden Bestandteile der Abgase für Dieselmotoren absolut unmöglich und sogar für Benzineinspritzmotoren nur bedingt zulässig, da die erwähnten unerwünschten Bestandteile diese bekannten Geräte in kürzester Zeit zerstören. Trotzdem wäre gerade wegen des immer stärkeren Einsatzes von Dieselmotoren bei Kraftfahrzeugen auch eine Untersuchung der Abgase von Einspritzmotoren anzustreben.

Die letztgenannte Aufgabe wird erfindungsgemäß dadurch gelöst, daß zur Untersuchung der Abgase von Einspritzmotoren, insbesondere Dieselmotoren, dem Testgerät ein Vorschaltgerät mit einer Filteranordnung zur Abscheidung sowohl von Ruß als auch von Ölpartikeln sowie von unverbrannten Paraffinölen zugeordnet ist.

Die Verwendung entsprechender Filteranordnungen wurde bisher weder vorgeschlagen noch aufgrund bestehender Bedenken überhaupt angedacht. Tatsächlich führen aber richtig ausgelegte Filter zu einem absolut positiven Ergebnis bei ausreichendem Schutz des Testgerätes und zu genauen Meßwerten bei der Abgas-untersuchung.

Wegen des oft erhöhten Wasserdampfgehaltes in den Abgasen von Einspritzmotoren und auch um die Ruß- und Ölfilter nicht unnötig zu belasten, weist nach einer Weiterbildung der Erfindung das Vorschaltgerät einen zusätzlichen Abscheider für kondensiertes Abwasser auf, dem ein mit Luft betriebener Gaskühler vorgeordnet ist. Durch diesen Gaskühler wird die Wasserabscheidung begünstigt und überdies die Wärmebelastung der weiteren Filter und des Testgerätes selbst verringert.

Konstruktiv hat eine Ausführung zum Erfolg geführt, nach der die Filteranordnung aus einem Vorfilter, insbesondere auf Keramikbasis, mit hohem, über 99 % bezogen auf 0,01 um liegendem Wirkungsgrad und einem Restölgehalte von 0,01 ppm und einem nachgeordneten Karbonfilter mit einem Restölgehalt von 0,005 ppm aufgebaut ist.

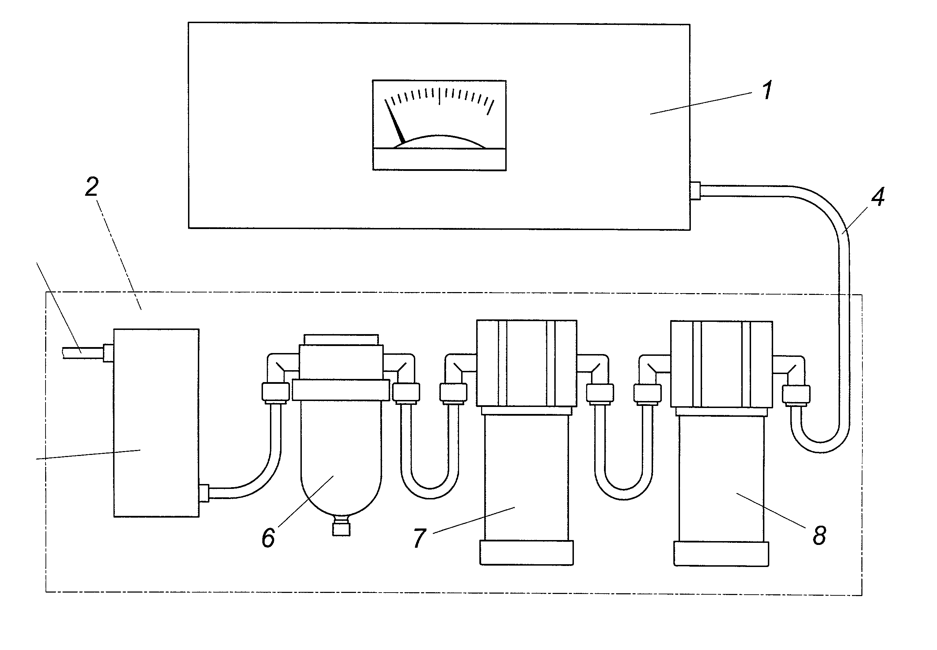

Weitere Vorteile des Erfindungsgegenstandes entnimmt man der nachfolgenden Zeichnungsbeschreibung. In der Zeichnung ist der Erfindungsgegenstand an Hand eines Ausführungsbeispieles im Schema dargestellt.

Einem nur in seinen Umrissen angedeuteten Abgas-Prüfgerät 1, das z. B. nach dem Prinzip der Infrarot-Spektralanalyse arbeitet, ist ein vorzugsweise in einem Kasten oder auf einer dem Abgas-Testgerät zugeordneten Trägerwand ein Vorschaltgerät 2 zugeordnet, das einen mit den Abgasen eines Dieselmotors oder eines sonstigen Einspritzmotors beaufschlagten Einlaßanschluß 3 und einen zum Abgas-Testgerät 1 führenden Auslaßanschluß 4 aufweist. Das Vorschaltgerät 2 besteht beim Ausführungsbeispiel aus einem Gaskühler 5, der z.B. über einen Ventilator oder ein sonstiges Gebläse mit Kühlluft beaufschlagt wird und - in Reihenanordnung - einem Wasserabscheider 6, einem Vorfilter 7 auf Keramikbasis und einem Karbonfilter 8.

## Patentansprüche

1. Abgas-Testgerät für Brennkraftmaschinen, insbesondere von Kraftfahrzeugen, zur Bestimmung des Kohlenoxid- (CO- und CO₂-) und Stickoxid- (NO-NO₂-(NO)ₓ-)gehaltes mit einem für die Abgasuntersuchung bei Benzin-Vergasermotoren geeigneten, nach dem Prinzip der IR-Untersuchung arbeitenden Testgerät (1), dem ein Filter (7) zur Abscheidung von Festpartikeln und ein Abscheider (6) für Wasser vorgeordnet ist, **dadurch gekennzeichnet, daß** dem Testgerät (1) zur Untersuchung der Abgase von Einspritzmotoren, insbesondere Dieselmotoren, ein Vorschaltgerät (2) mit einer Filteranordnung (7, 8) zur Abscheidung sowohl von Ruß als auch von Ölpartikeln sowie von unverbrannten Paraffinölen zugeordnet ist.

2. Abgas-Testgerät nach Anspruch, **dadurch gekennzeichnet, daß** das Vorschaltgerät (2) einen zusätzlichen Abscheider (6) für kondensiertes Abwasser aufweist, dem ein mit Luft betriebener Gaskühler (5) vorgeordnet ist.

3. Abgas-Testgerät nach Anspruch 1 oder 2, **dadurch gekennzeichnet, daß** dem Abscheider (6) für kondensiertes Abwasser ein vorzugsweise Abgas-Testgerät nach einem der Ansprüche 1 bis 3, **dadurch gekennzeichnet, daß** die Filteranordnung aus einem Vorfilter (7), insbesondere auf Keramikbasis, mit hohem, über 99 % bezogen auf 0,01 um liegendem Wirkungsgrad und einem Restölgehalte von 0,01 ppm und einem nachgeordneten Karbonfilter (8) mit einem Restölgehalt von 0,005 ppm aufgebaut ist.
